(19) **Europäisches Patentamt / European Patent Office / Office européen des brevets**

(11) **EP 2 892 686 B1**

(12) **EUROPEAN PATENT SPECIFICATION**

(45) Date of publication and mention
of the grant of the patent:
**08.07.2020 Bulletin 2020/28**

(21) Application number: **13759714.2**

(22) Date of filing: **04.09.2013**

(51) Int Cl.:
***B23P 6/00*** *(2006.01)*  ***B23P 23/04*** *(2006.01)*
***B23K 26/342*** *(2014.01)*  ***F01D 5/00*** *(2006.01)*
*B23K 35/02* *(2006.01)*  *B23K 26/08* *(2014.01)*
*B23K 26/00* *(2014.01)*

(86) International application number:
**PCT/EP2013/068279**

(87) International publication number:
**WO 2014/037397 (13.03.2014 Gazette 2014/11)**

(54) **METHOD FOR REPAIRING A TURBOMACHINE COMPONENT**

VERFAHREN ZUR REPARATUR EINER TURBOMASCHINENKOMPONENTE

PROCÉDÉ DE RÉPARATION D'UN ÉLÉMENT DE TURBOMACHINE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.09.2012 IT CO20120041**

(43) Date of publication of application:
**15.07.2015 Bulletin 2015/29**

(73) Proprietor: **Nuovo Pignone S.p.A.
50127 Florence (IT)**

(72) Inventors:
• **GIORNI, Eugenio
I-50127 Florence (IT)**
• **PAOLUCCI, Attilio
I-50127 Florence (IT)**
• **MAMMOLITI, Fabrizio
I-50127 Florence (IT)**

• **ANDOLFI, Alessio
I-50127 Florence (IT)**
• **PINESCHI, Federico
I-50127 Florence (IT)**
• **CATASTINI, Riccardo
I-50127 Florence (IT)**

(74) Representative: **Illingworth-Law, William
Illingworth et al
Baker Hughes, A GE Company
The Ark
201 Talgarth Road
Hammersmith
London W6 8BJ (GB)**

(56) References cited:
**EP-A1- 1 695 789**     **EP-A1- 1 696 220**
**DE-A1- 3 545 158**     **FR-A1- 2 889 092**
**US-A1- 2003 167 616**     **US-A1- 2006 067 830**

EP 2 892 686 B1

**Description**

TECHNICAL FIELD

The present invention relates to method for repairing a turbomachine component by laser-cladding.

BACKGROUND ART

EP 1 695 789 A1 discloses a method as per the preamble of claim 1, in particular it discloses repairing a damaged zone in a one-piece bladed disc comprising a build-up welding operation carried out on a test piece having a defined profile and checking the quality of the test piece after the build-up welding.
The increasing use of turbomachines to the operational limits requires the development of specific repair technologies designed to reproduce conditions close to those of new parts. Both rotating and non-rotating parts are subject to damages due to erosion and/or to wear.
For example, steam turbine shafts are often damaged in coupling areas at shaft ends and in journal bearing areas. On centrifugal compressor shafts the same situation occurs for bearing journals and for the shaft ends, while very often during compressor overhaul; impellers are found with the sealing area worn out. Other rotary or stationary parts can be damaged as well, such as steam turbine blades, centrifugal compressor cases, or gas turbine rotors.
In the above field, conventional repairing techniques, such as electric arc or microplasm deposit welding, show a plurality of disadvantages, i.e., in particular, high heating and cooling rates and low melting volumes. As an alternative, repairing methods by laser surfacing are known. Advantages of the latter over alternative surfacing processes include:

- Chemically cleanliness, as combustion or ion bombardment are not involved,

- Localized heating with minimum heat transfer to the substrate, resulting in minimal thermal damage for the component,

- Reduced post-machining procedures,

- Possibility to process very hard, brittle, or soft materials,

- Possibility to control heat penetration,

- Possibility to deposit thicker layers.

Among laser surfacing methods, laser cladding is generally known. Laser cladding uses a laser beam to fuse a cladding material having desired properties into the base material of a component whose surface is to be repaired. Laser cladding offers the possibility to create surface layers with superior properties in terms of pureness, homogeneity, hardness, bonding, and microstructure.
Laser cladding repairing methods are already used to repair stationary components, as described in US20100287754, or to deposit small volumes of cladding material, as described in US20090057275.
To repair larger and thicker damaged areas and/or surfaces of rotary components, the method parameters have to be properly tuned in order to optimally restore the aspect and properties of the damaged components. In particular, it has to be solved the conflict between the demand of achieving a good metallurgical bond, necessary to rebuild damaged parts, and avoiding mixture between the coating and the base material in order to have desired coating properties on the surface. In general, the right correlation between all the variables of the process has to be found.
It would be therefore desirable to provide an improved laser cladding method which permits to find such a correlation in an easy and reproducible way for each turbomachine component to be repaired, in order to avoid the inconveniencies of the known prior arts.

SUMMARY

The present invention accomplishes such an object by providing a method for repairing a turbomachine component as defined in claim 1 comprising the steps of:

- setting up a laser cladding machine;
- preparing at least a portion of a turbomachine component to be repaired by removing a damaged volume of said component;

- rotating one of said laser cladding machine and turbomachine component with respect to the other of said laser cladding machine and turbomachine component
- rebuilding said damaged volume by laser cladding in order to obtain a rebuilded volume in said component;
- applying a heat treatment to at least said rebuilded volume of said turbomachine component;
- finishing a surface of said rebuilded volume;
- non-destructively testing said rebuilded volume.

The step of setting up the laser cladding machine includes the sub-steps of:

- identifying a set of laser cladding process parameters,
- identifying a sample;
- welding a first layer on said sample by said laser cladding machine after imposing said set of laser cladding process parameters;
- comparing a plurality of geometric data of the first layer with a respective plurality of reference data range;
- if said plurality of geometric data are within said plurality of reference data ranges, welding a plurality of further layers on said sample by said laser cladding machine;
- testing said plurality of further layers by micrographic inspection for defining the parameters to operate said rebuilding phase.

According to a further advantageous feature the plurality of geometric data includes:

- at least an angle ($\alpha$) between an edge of said first layer and a surface of said sample, having a value of 150° to 160°;
- the height of said first layer,
- the width of said first layer,
- the ratio between said width and said height of said first layer being greater than 5.

With respect to other known repairing methods, the solution of the present invention allows to:

- easily find the correct correlation between the laser cladding parameters for each turbomachine component to be repaired,
- efficiently rebuild greater damaged volume, by depositing layers of cladding materials up to a thickness of 6 mm, without diminishing the mechanical properties of the repaired component.

A mobile apparatus for repairing a turbomachine component is provided comprising a turning machine and a laser cladding device of the type including a laser device for creating a laser beam and a powder feeder device for blowing a metal powder towards said laser beam, wherein said laser cladding device is fixable to a tool station of said turning machine.
The same advantages described above with reference to the method of the present invention are accomplished by this apparatus. In addition, the apparatus permits the method of the present invention to be performed directly on site, without requiring the whole turbomachine or the components to be repaired to be moved away.

BRIEF DESCRIPTION OF THE DRAWINGS

Other object feature and advantages of the present invention will become evident from the following description of the embodiments of the invention taken in conjunction with the following drawings, wherein:

- Figures 1 is a general block diagram of a method for repairing a turbomachine, according to the present invention;
- Figure 2 is a detailed block diagram of the method in figure 1;
- Figures 3-4 are detailed block diagrams of embodiments of the method in figure 1 respectively corresponding to different components of a turbomachine;
- Figure 5 is a block diagram of a portion of the method in figure 1;

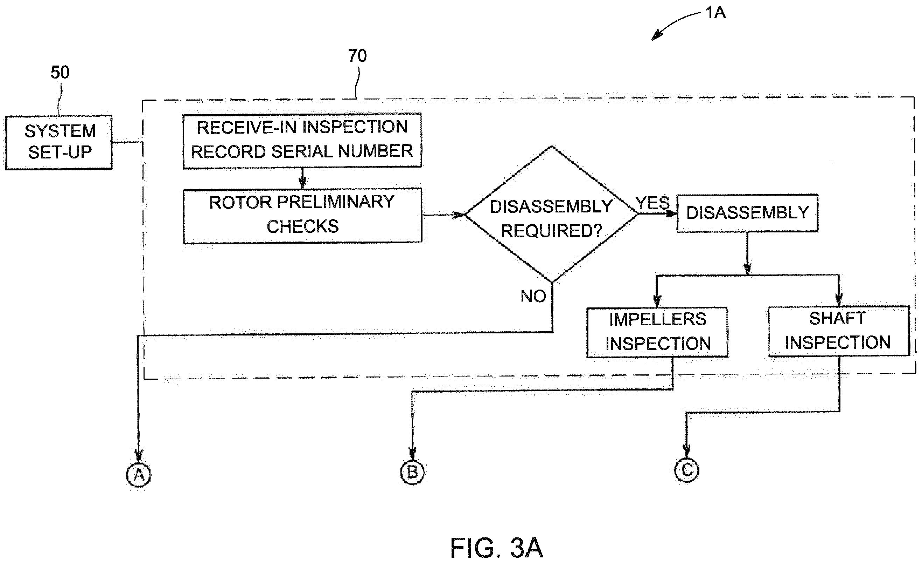

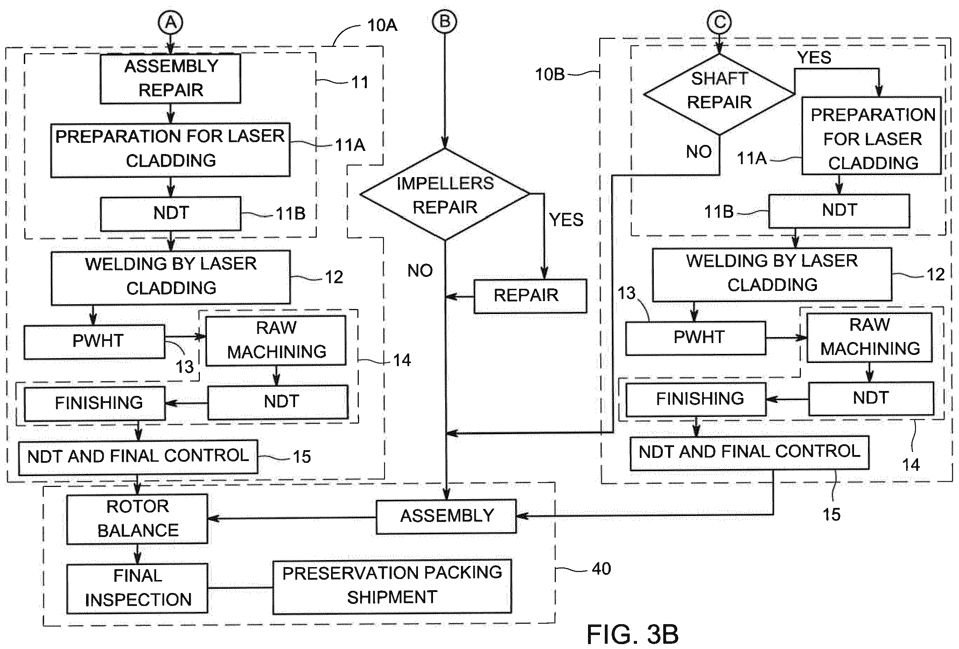

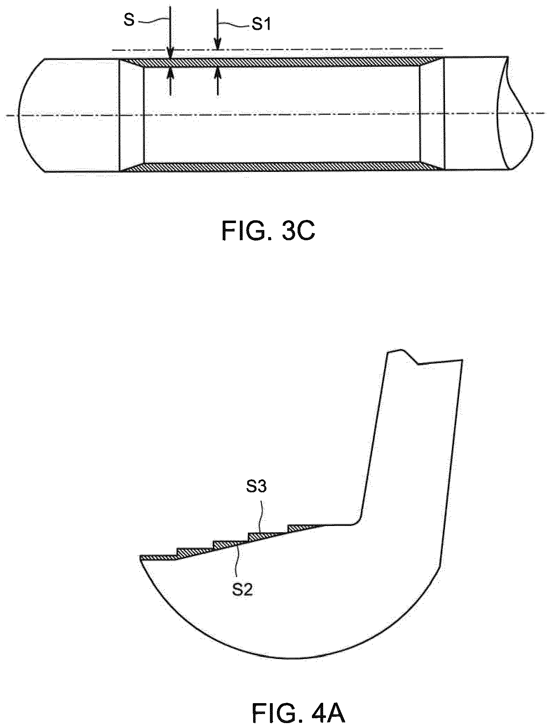

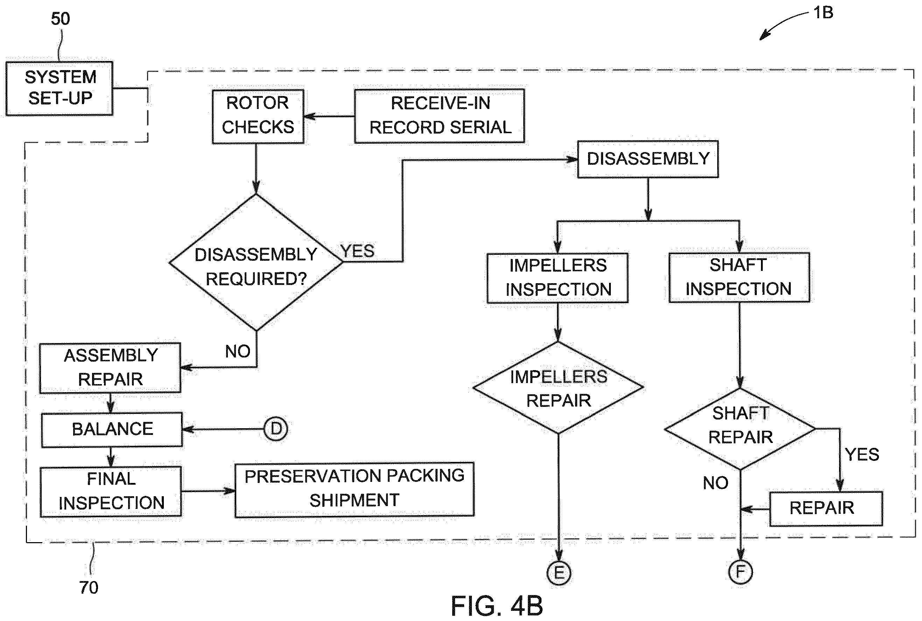

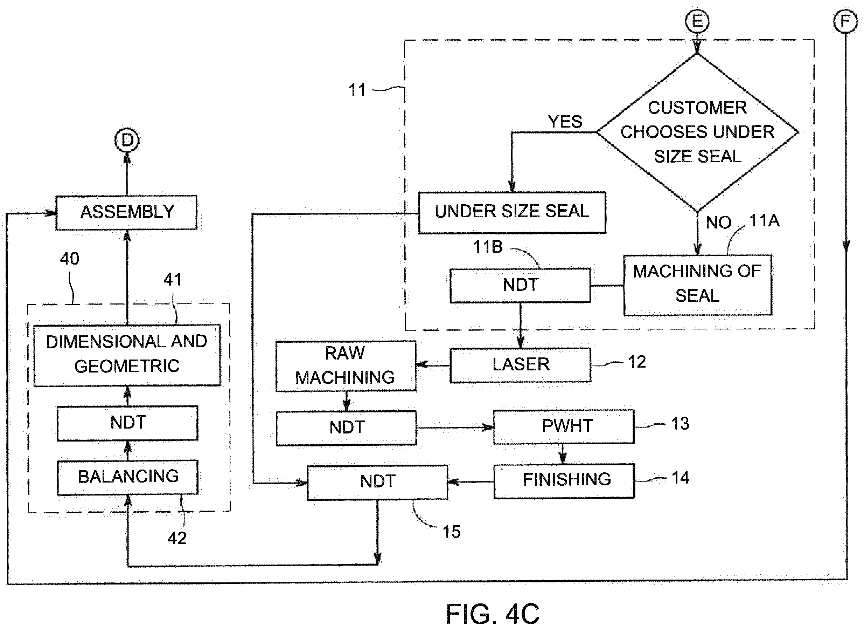

- Figures 3bis and 4bis are detailed side views of two turbomachine components to which the embodiments of the method in Figures 3 and 4 are respectively applicable;

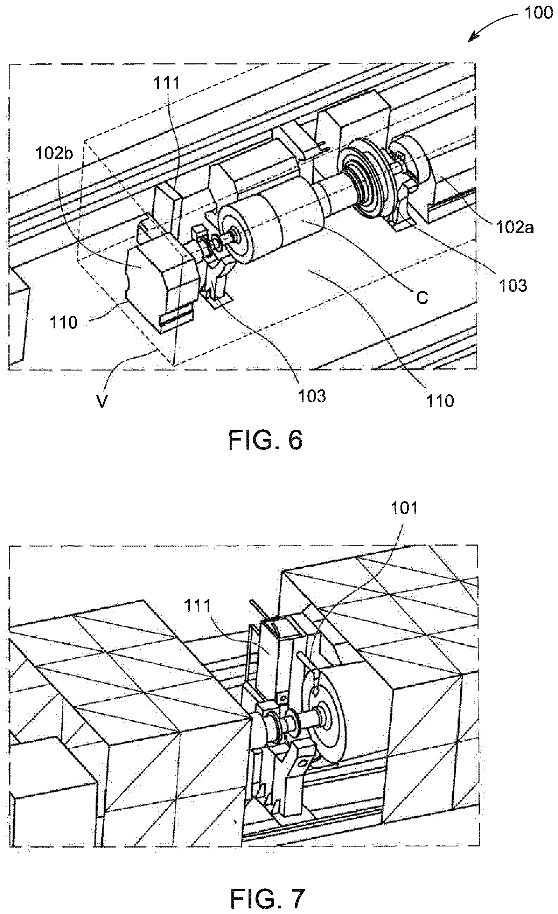

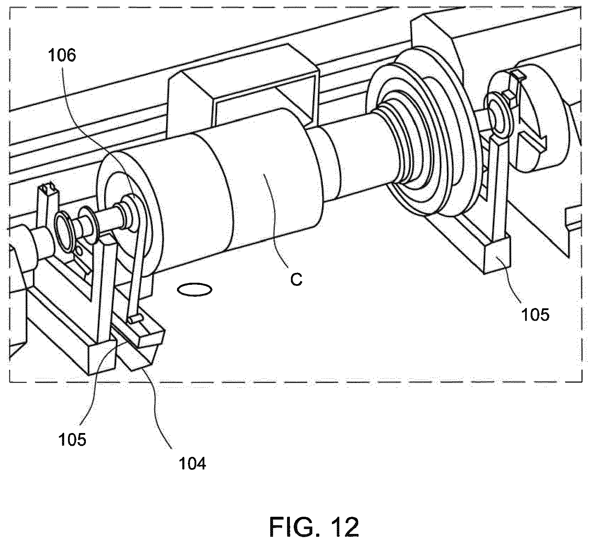

- Figures 6-12 are perspective views of an apparatus for repairing a turbomachine, in different operating conditions.

DETAILED DESCRIPTION OF SOME PREFERRED EMBODIMENTS OF THE INVENTION

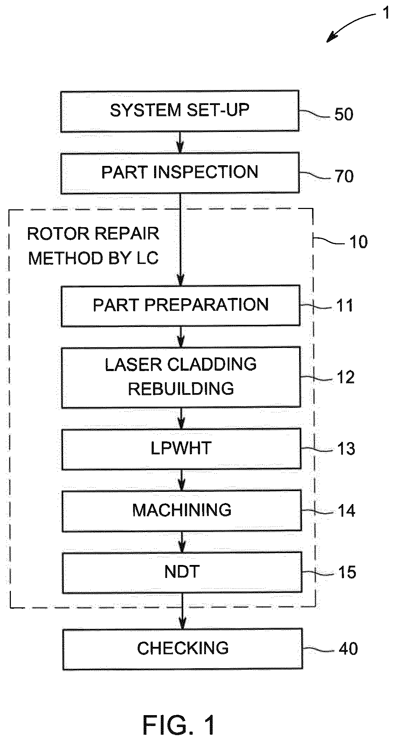

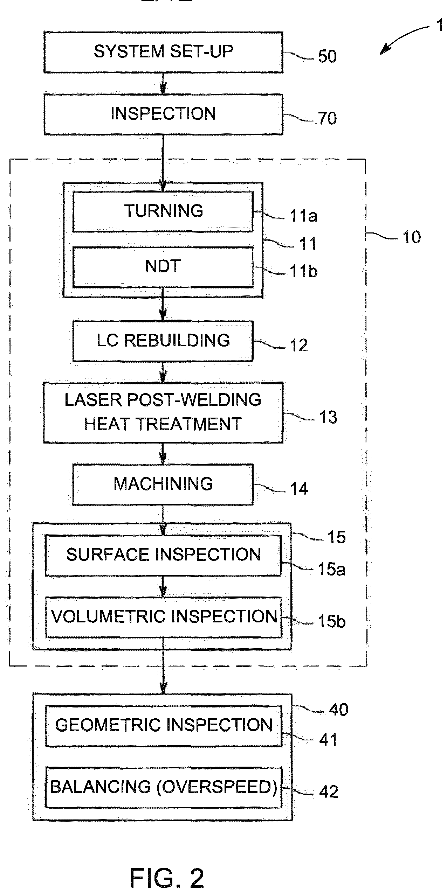

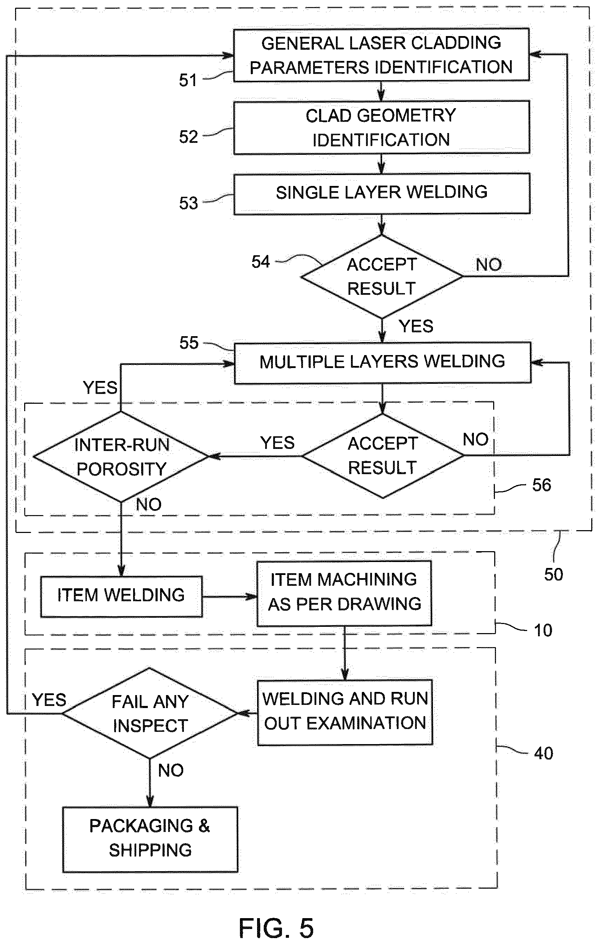

With reference to the attached figures 1-5, a method for repairing a turbomachine component C is overall indicated with 1.

The method 1 comprises a first step 50 of setting up a laser cladding machine 100 (i.e. an "apparatus"), including a laser beam device 101 (i.e. a "laser cladding device") and a powder feeder.

The laser beam device 101 is of a conventional type, for example Rofin YAG laser, 2.2 kW or IPG fiberlaser, 2.2 kW. In general, for the purposes of the present invention, other laser beam devices can be used provided that a uniform power density is reached in order to obtain an acceptable uniform temperature distribution and consistent clad properties over the width of the laser track.

With reference to figure 6-12, the laser cladding machine 100 includes:

- a lathe 102, having a main body 102a and a tailstock body 102b;

- a pair of supports 103, for supporting the component C to be repaired between the main body 102a and the tailstock body 102b of the lathe. In the example in figure 6 the component C is the rotary shaft of a turbocompressor, including a plurality of impellers mounted thereof. The present invention can be used for repairing the journal bearing region or the impellers in a rotary shaft. In general the present invention is adaptable for repairing a plurality of component in a plurality of regions subject to erosion or corrosion or wear;

- a balancing device 104, including pair of balancing supports 105, each having a wrap around belt 106, for balancing the component C;

- a pair of guides 110, wherein the tailstock body 102b and the supports 103, 104 are mounted in such a way to be aligned with the main body 102a of the lathe. The tailstock body 102b and the supports 103, 104 are movable along guides 110 towards the the main body 102a or away from it.

With reference to figure 6-12, the laser cladding machine 100 further includes:

- a tool station 111, wherein the laser beam device 101 is mounted. A plurality of turning tools 112, arranged in a circular tool holder 113, are also mounted on the tool station 111, which therefore can be used as a machining station and also as a laser cladding station;

- a grinder 115, for surface finishing after cladding;

- an horizontal post-welding heat treatment station 116, for heat treating the component C after repairing by laser cladding has been executed.

The tool station 111, grinder 115 and post-welding heat treatment station 116 are movable parallel to the guides 110 in various configurations, as detailed further above.

The laser cladding machine 100 is also configurable in order to be completely housed in a limited volume V, suitable for transportation by truck, in particular a standard shipping container.

The first step 50 of setting up the laser cladding machine includes a first sub-step 51 of identifying a set of laser cladding process parameters.

The process parameters, with relevant ranges, include:

- powder rate: 1.5 to 6g/min,
- laser beam power $P_S$: 900 to 1500,
- scanning speed v: 2 to 10 mm/s,
- stand-off distance (i.e. distance between the nozzle of the powder feeder and the part to be repaired): 11 to15mm,
- cover gas flow rate: 8 to10 l/min,
- powder mesh: 45 to 105 micron,
- energy density E: 110 to 120 J/mm$^2$.

The powder type is chose among Inconel 625, Stellite 21 or ASTM A 322 type 4140.

The above parameters have to be correctly tuned depending on the type and geometry of the component to be repaired, on the specific laser cladding machine which is used to perform the repairing operations and on the environment, for example room temperature and humidity. For example the latter has influence on the choice of powder mesh. First tentative values are defined first sub-step 51 in the first sub-step 51 by applying the procedure which follows, based on relations A1, A2, A3, A4.

Energy density is defined as

$$E = P_S \cdot I_t, \qquad\qquad (A1)$$

where

$$P_S = P_L / A_w \qquad\qquad (A2)$$

is the specific power and

$$I_t = d_S/v \qquad\qquad (A3)$$

is the interaction time process. $A_w$ and $d_S$ are, respectively, welding area and spot welding diameter, depending on the geometry of the region to be repaired and of the laser cladding device 101, for example optics, i.e. lenses and focal length of the laser cladding device.

By combining together the above relations A1, A2 and A3, the following expression for E is obtained:

$$E = (P_L \cdot ds) / (A_w \cdot v) \qquad\qquad (A4)$$

In the above, the PL, ds, Aw, and v have to be tuned in order to limit the energy density between 110 and 120 J/mm². Scanning speed v is to tuned between 2 and 10 mm/s, in order to avoid high thermal residual stresses.

The first step 50 of setting up the laser cladding machine includes a second sub-step 52 of identifying a sample, for example a cylinder of the same material of the component to be repaired.

In a third sub-step 53 of the first step 50, a first layer is welded on the sample by the laser cladding machine 100 after imposing a set of the above laser cladding process parameters.

In a fourth sub-step 54 of the first step 50, a plurality of geometric data of the first layer is compared with a respective plurality of reference data ranges.

Geometric data includes:

- an angle $\alpha$ between an edge of the first layer and a surface of said sample;

- the height of the first layer,

- the width of the first layer,

- the depth of penetration of the layer,

- width or depth of the first layer heat affected zone.

Reference data ranges are:

- Energy density E between 110 and 120 J/mm²

- clad aspect ratio (width / height) greater than 5;

- angle $\alpha$ included between 150° and 160°.

If the plurality of geometric data is within the specified ranges, the first step 50 of the method 1 continues with fifth sub-step 55 of welding a plurality of further layers on the sample by the laser cladding machine 100.

In a sixth sub-step 56, the plurality of further layers is tested by micrographic inspection, including examining inter-run porosity, wherein the reference parameter is an overlap parameter defined as clad width percentage of overlap.

If the plurality of geometric data are outside the plurality of reference data ranges, the first step 50 of setting up the laser cladding machine 100 includes the further sub-step of modifying said set of laser cladding process parameters. For example, if the angle $\alpha$ is greater than said respective angle range than the powder rate is reduced. In general all parameters are inter-correlated, therefore a correct set have to be defined considering all of them. After changing the process parameters the third and fourth sub-step 53, 54 are repeated.

In order to carry out the set-up of the laser cladding machine 100, in particular the laser beam device 101, one or (typically) more accessories are used; the laser cladding machine 100 is advantageously provided and shipped with these accessories.

The method 1 comprises a second step 70 of inspecting the turbomachine component to be repaired.

After the second step 70, the method 1 includes a group 10 of repairing steps 11, 12, 13, 14. The group of repairing steps 11, 12, 13, 14 includes:

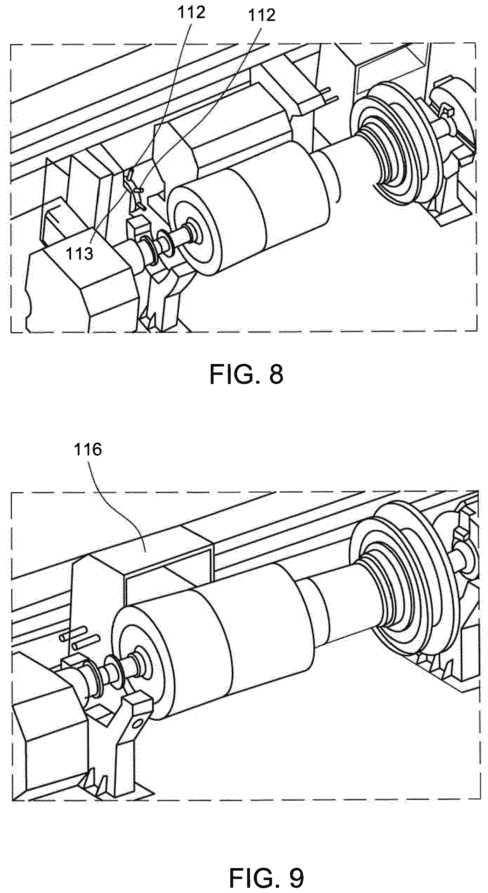

- a third step 11 of preparing a portion of the turbomachine component C to be repaired by removing a damaged volume of said component by a turning sub-step 11a (figure 8). When repairing journal bearing, a circumferential groove (figure 3bis) has to be created, having a depth S depending on the amount of material to be deposited in the following step, by laser cladding. After the turning sub-step 11a a subsequent sub-step 11b of non-destructive testing the portion prepared in the previous sub-step 11a is performed in order to verify that all damaged portion of the turbomachine component C has been removed. After preparing the portion to be repaired the component C is again rotated with respect to laser cladding machine 100, in order that the round geometry of the turbomachine component C can be repaired without moving laser beam device 101;

- a fourth step 12 of rebuilding the damaged volume by the laser beam device 101 in order to obtain a rebuilded volume in the component C (figure 7). In the fourth step 12, the laser beam device 101 is operated according to the parameters define in the first set-up step 50;

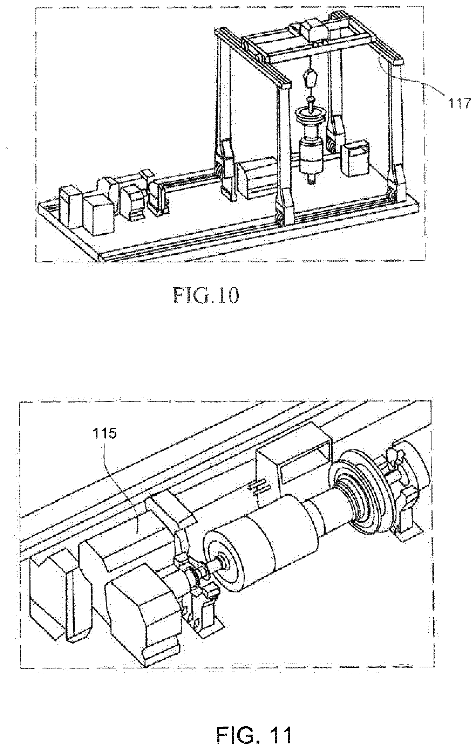

- a fifth step 13 of applying a heat treatment to the rebuilded volume of the turbomachine component C. The heat treatment can be applied horizontally, by using the heating station 116 (figure 9) or vertically, by using the crane 117 (figure 10). Vertical heat treatment are preferable for long components, e.g. shafts;

- a sixth step 14 of finishing a surface of the rebuilded volume by further turning and then, optionally, in the case of journal bearing repair, grinding by grinder 115 (figure 11);

- a final step 15 of inspecting the surface and the inside of the rebuilded volume.

The final step 15 comprises:

- a first sub-step 15a of testing the surface of the rebuilded volume by dye penetrant inspection and, optionally, in the case of journal bearing repair,
- a second sub-step 15b of testing an inner portion of said rebuilded volume by eddy current inspection.

At the end of the method 1, the step 15 is followed by a further step 40 of finally checking the turbomachine component C, including a dimensional and geometric check 41 and a balancing sub-step 42, by using the balancing device 104.

In an example 1a (figure 3), the method of the present invention is applied to the journal bearing region (figure 3bis) of the rotary shaft of a turbomachine, e.g. a turbocompressor. The method 1a comprises the first step 50 of setting up the laser cladding machine, as above described and the second step 70 of inspecting the rotary shaft of the turbomachine to be repaired. During the second step 70, preliminary checks are performed in order to decide if disassembly of the rotary shaft, i.e. disassembly impellers from shaft, is required for repairing the journal bearing region or if disassembly of the rotary shaft is not necessary. In the latter case the journal bearing region is to be repaired without disassembling the impellers and the method 1a continues with the group 10a of repairing steps, including:

- the third step 11 of preparing the trapezoidal circumferential groove (figure 3bis) having a depth S depending on the amount of material to be deposited in the following fourth step 12. The third step 11 includes the sub-step 11a of turning the journal bearing region for creating the trapezoidal circumferential groove and the sub-step 11b of non-destructive testing the groove obtained in the previous sub-step 11a for verifying that the damaged portion of the journal bearing region has been completely removed;

- the fourth step 12 of rebuilding the damaged volume by filling the trapezoidal circumferential groove with the laser beam device 101 by depositing one or more layers of material having an overall thickness S1, greater than S;

- the fifth step 13 of applying a heat treatment to the repaired rotary shaft;

- the sixth step 14 of finishing the surface of the rebuilded volume by first raw machining, then non-destructive testing and finally grinding by grinder 115 (figure 11);

- the final step 15 of testing both the surface and the inside of the rebuilded volume by applying, respectively, the sub-steps 15a,b of dye penetrant inspection and eddy current inspection.

In the case that preliminary checks of the second step 70 identify that disassembly of the rotary shaft is required, method 1a continues with a disassembly step by which the impellers are disassembled from the shaft and with a group 10b of repairing steps, including the same steps of the group 10a. Differently from the group 10a, the group of steps 10b is applied on the shaft. At the end the final step 15 of testing the impellers and the repaired shaft are again assembled.

Both groups of steps 10a and 10b are in the end followed by the step 40 of finally checking the turbomachine component C, including first the balancing sub-step 42, performed for example by using the balancing device 104, and then the dimensional and geometric check 41.

In another example 1b (figure 4), the method of the present invention applied to an impeller eye seal region of a turbomachine (figure 4bis), e.g. an impeller of a turbocompressor. The method 1b comprises the first step 50 of setting up the laser cladding machine, as above described, and the second step 70 of inspecting the impeller eye seal region of the turbomachine to be repaired. During the second step 70, impellers are disassembled from shaft. If necessary, the shaft is also repaired, for example by using the embodiment 1a above described. After the second step 70 the method 1b continues with the group 10 of repairing steps, including:

- the third step 11 of preparing a smooth conical surface S2 in the impeller eye seal damaged region (figure 3bis). The third step 11 includes the sub-step 11a of turning the impeller for creating conical surface S2 and the sub-step 11b of non-destructive testing the surface obtained in the previous sub-step 11a for verifying that the damaged volume has been completely removed;
- the fourth step 12 of rebuilding the damaged volume by re-creating the stepped eye seal region S3 with the laser beam device 101;
- the fifth step 13 of applying a heat treatment to the repaired impeller;
- the sixth step 14 of finishing the rebuilded volume stepped eye seal region S3 by turning;
- the final step 15 of testing the surface of the eye seal region S3 by applying dye penetrant inspection.

The group of steps 10 is in the end followed by the step 40 of finally checking the turbomachine component C, including first the balancing sub-step 42, performed by rotating the impeller till overspeed conditions are reached, and final geometric check 41.

In general, many other turbomachine components can be repaired with the method of the present invention by using a laser cladding machine as above described.

In all cases it is essential that the laser cladding process parameters are correctly defined by correctly applying the set up step 50, thus allowing to accomplish the object and advantages cited above.

## Claims

1.  A method (1) for repairing a turbomachine component (C), the method comprising the steps of:

    - setting up (50) a laser cladding machine;
    - preparing (11) at least a portion of a turbomachine component to be repaired by removing a damaged volume of said component;
    - rotating one of said laser cladding machine and turbomachine component with respect to the other of said laser cladding machine and turbomachine component;
    - rebuilding (12) said damaged volume by laser cladding in order to obtain a rebuilt volume in said component;
    - applying a heat treatment (13) to at least said rebuilt volume of said turbomachine component;
    - finishing (14) a surface of said rebuilt volume;
    - non-destructively testing (15) said rebuilt volume;

    **characterized in that** the step of setting up (50) the laser cladding machine includes the sub-steps of:

    - identifying (51) a set of inter-correlated laser cladding process parameters and tuning the parameters depending on the type and geometry of the component to the repaired;
    - identifying (52) a sample;

- welding (53) a first layer on said sample by said laser cladding machine after imposing said set of laser cladding process parameters;
- comparing (54) a plurality of geometric data of the first layer with a respective plurality of reference data ranges;
- if the plurality of geometric data are outside the respective plurality of reference data ranges, modifying the set of inter-correlated laser cladding process parameters and repeating the third (53) and fourth (54) sub-steps of the setting up step (50);
- if said plurality of geometric data are within said plurality of reference data ranges, welding (55) a plurality of further layers on said sample by said laser cladding machine; and
- testing (56) said plurality of further layers by micrographic inspection for defining the parameters to operate said rebuilding phase.

2.  The method (1) according to claim 1, wherein the step of preparing (11) is preceded by a further step of inspecting (70) the turbomachine component to be repaired.

3.  The method (1) according to claim 1 or claim 2, wherein the step of non-destructively testing (15) comprises the sub-steps of:

   - testing the surface of said rebuilt volume by dye penetrant inspection (15a);
   - testing an inner portion of said rebuilded volume by eddy current inspection (15b).

4.  The method (1) according to any preceding claim, wherein the step of non-destructively testing (15) is followed by a further step of finally checking the turbomachine component.

5.  The method (1) according to any preceding claim, wherein setting up the laser cladding machine includes providing a laser cladding machine of the type including a laser device for creating a laser beam and a powder feeder device for blowing a metal powder towards said laser beam.

6.  The method (1) according to any preceding claim, wherein said laser cladding process parameters to be identified in said sub-step of identifying (51) include:

   - powder rate,
   - laser beam power,
   - powder type,
   - scanning speed,
   - stand-off distance,
   - cover gas flow rate,
   - powder mesh,
   - energy density.

7.  The method (1) according to claim 6, wherein the energy density is comprised between 110 and 120 $J/mm^2$.

8.  The method (1) according to any preceding claim, wherein said plurality of geometric data includes:

   - at least an angle ($\alpha$) between an edge of said first layer and a surface of said sample;
   - the height of said first layer,
   - the width of said first layer,

9.  The method (1) according to any preceding claim, wherein said plurality of geometric data have to be included in the following respective plurality of ranges:

   - ratio between said width and said height of said first layer: greater than 5,
   - said angle ($\alpha$) between an edge of said first layer and a surface of said sample: 150° to 160°.

10. The method (1) according to any preceding claim, wherein, if said plurality of geometric data are outside said plurality of reference data ranges, the step of setting up (50) the laser cladding machine includes the further sub-steps of:

   - modifying said set of laser cladding process parameters;
   - welding (53) a first layer on said sample by said laser cladding machine after changing said set of laser cladding process parameters;
- comparing (54) said plurality of geometric data of the first layer with said respective plurality of reference data range.

11. The method (1) according to claim 8 or any claim dependent on claim 8, wherein if said at least one angle ($\alpha$) is greater than said respective angle range than the powder rate is reduced.

12. The method (1) according to any preceding claim, wherein testing (56) said plurality of further layers by micrographic inspection include examining inter-run porosity.

**Patentansprüche**

1. Verfahren (1) zum Reparieren einer Turbomaschinenkomponente (C), umfassend die Schritte:

   - Einrichten (50) einer Laserauftragschweißmaschine;
   - Vorbereiten (11) mindestens eines Abschnitts einer zu reparierenden Turbomaschinenkomponente durch Entfernen eines beschädigten Volumens der Komponente;
   - Drehen der Laserauftragschweißmaschine und/oder der Turbomaschinenkomponente in Bezug auf die jeweils andere der Laserbeschichtungsmaschine und der Turbomaschinenkomponente;
   - Wiederaufbauen (12) des beschädigten Volumens durch Laserauftragschweißen, um ein wiederaufgebautes Volumen in der Komponente zu erhalten;
   - Anwenden einer Wärmebehandlung (13) auf mindestens das wiederaufgebaute Volumen der Turbomaschinenkomponente;
   - Endbearbeiten (14) einer Oberfläche des wiederaufgebauten Volumens;
   - zerstörungsfreies Prüfen (15) des wiederaufgebauten Volumens;

   **dadurch gekennzeichnet, dass** der Schritt des Einrichtens (50) der Laserauftragschweißmaschine die Teilschritte einschließt:

   - Erkennen (51) eines Satzes miteinander korrelierter Laserauftragschweißprozessparameter und Abstimmen der Parameter je nach Art und Geometrie der zu reparierenden Komponente;
   - Erkennen (52) einer Probe;
   - Schweißen (53) einer ersten Schicht auf die Probe durch die Laserauftragschweißmaschine nach Anwenden des Satzes von Laserauftragschweißprozessparametern;
   - Vergleichen (54) einer Vielzahl geometrischer Daten der ersten Schicht mit einer entsprechenden Vielzahl von Referenzdatenbereichen;
   - wenn die Vielzahl geometrischer Daten außerhalb der entsprechenden Vielzahl von Referenzdatenbereichen liegt, Modifizieren des Satzes miteinander korrelierter Laserauftragschweißprozessparameter und Wiederholen des dritten (53) und vierten (54) Teilschritts des Einrichtungsschritts (50);
   - wenn die Vielzahl geometrischer Daten innerhalb der Vielzahl von Referenzdatenbereichen liegt, Schweißen (55) einer Vielzahl weiterer Schichten auf die Probe durch die Laserauftragschweißmaschine; und
   - Testen (56) der Vielzahl weiterer Schichten durch mikrographische Inspektion zum Festlegen der Parameter für den Betrieb der Wiederaufbauphase.

2. Verfahren (1) nach Anspruch 1, wobei dem Schritt des Vorbereitens (11) ein weiterer Schritt des Untersuchens (70) der zu reparierenden Turbomaschinenkomponente vorausgeht.

3. Verfahren (1) nach Anspruch 1 oder Anspruch 2, wobei der Schritt des zerstörungsfreien Prüfens (15) die Teilschritte umfasst:

   - Prüfen der Oberfläche des wiederaufgebauten Volumens durch Farbeindringprüfung (15a);
   - Prüfen eines inneren Abschnitts des wiederaufgebauten Volumens durch Wirbelstromprüfung (15b).

4. Verfahren (1) nach einem der vorstehenden Ansprüche, wobei dem Schritt des zerstörungsfreien Prüfens (15) ein weiterer Schritt der Endkontrolle der Turbomaschinenkomponente folgt.

5. Verfahren (1) nach einem der vorstehenden Ansprüche, wobei das Einrichten der Laserauftragschweißmaschine das Bereitstellen einer Laserauftragschweißmaschine der Art einschließt, die eine Laservorrichtung zum Erzeugen eines Laserstrahls und eine Pulverzuführvorrichtung zum Blasen eines Metallpulvers in Richtung des Laserstrahls einschließt.

6. Verfahren (1) nach einem der vorstehenden Ansprüche, wobei die im Teilschritt des Erkennens (51) zu erkennenden Laserbeschichtungsprozessparameter einschließen:

- Pulveranteil,
- Laserstrahlleistung,
- Pulverart,
- Abtastgeschwindigkeit,
- Abstand,
- Schutzgasvolumenstrom,
- Pulver-Mesh,
- Energiedichte.

7. Verfahren (1) nach Anspruch 6, wobei die Energiedichte zwischen 110 und 120 J/mm$^2$ liegt.

8. Verfahren (1) nach einem der vorstehenden Ansprüche, wobei die Vielzahl geometrischer Daten einschließt:

- mindestens einen Winkel ($\alpha$) zwischen einem Rand der ersten Schicht und einer Oberfläche der Probe;
- die Höhe der ersten Schicht,
- die Breite der ersten Schicht.

9. Verfahren (1) nach einem der vorstehenden Ansprüche, wobei die Vielzahl geometrischer Daten in der folgenden entsprechenden Vielzahl von Bereichen eingeschlossen sein muss:

- Verhältnis zwischen der Breite und der Höhe des ersten Schicht: größer als 5,
- dem Winkel ($\alpha$) zwischen einem Rand der ersten Schicht und einer Oberfläche der Probe: 150° bis 160°.

10. Verfahren (1) nach einem der vorstehenden Ansprüche, wobei, wenn die Vielzahl geometrischer Daten außerhalb der Vielzahl von Referenzdatenbereichen liegt, der Schritt des Einrichtens (50) der Laserauftragschweißmaschine die weiteren Teilschritte einschließt:

- Modifizieren des Satzes von Laserauftragschweißprozessparametern;
- Schweißen (53) einer ersten Schicht auf der Probe durch die Laserauftragschweißmaschine nach Ändern des Satzes von Laserauftragschweißprozessparametern;
- Vergleichen (54) der Vielzahl geometrischer Daten der ersten Schicht mit der entsprechenden Vielzahl von Referenzdatenbereichen.

11. Verfahren (1) nach Anspruch 8 oder einem von Anspruch 8 abhängigen Anspruch, wobei der Pulveranteil verringert ist, wenn der mindestens eine Winkel ($\alpha$) größer als der jeweilige Winkelbereich ist.

12. Verfahren (1) nach einem der vorstehenden Ansprüche, wobei das Prüfen (56) der Vielzahl weiterer Schichten durch mikroskopische Untersuchung das Kontrollieren der Porosität zwischen den Durchläufen einschließt.

**Revendications**

1. Procédé (1) de réparation d'un élément (C) de turbomachine, le procédé comprenant les étapes consistant à :

- mettre en place (50) une machine de gainage laser ;
- préparer (11) au moins une partie d'un élément de turbomachine à réparer en éliminant un volume endommagé dudit élément ;
- faire tourner l'un de ladite machine de gainage laser et dudit élément de turbomachine par rapport à l'autre de ladite machine de gainage laser et de l'élément de turbomachine ;
- reconstituer (12) ledit volume endommagé au moyen d'un gainage laser afin d'obtenir un volume reconstruit dans ledit élément ;

- appliquer un traitement thermique (13) sur au moins ledit volume reconstruit dudit élément de turbomachine ;
- finir (14) une surface dudit volume reconstruit ;
- tester (15) de manière non destructive ledit volume reconstruit ;

**caractérisé en ce que** l'étape de mise en place (50) de la machine de gainage laser inclut les sous-étapes consistant à :

- identifier (51) un ensemble de paramètres de procédé de gainage laser inter-corrélés et accorder les paramètres en fonction du type et de la géométrie de l'élément à réparer ;
- identifier (52) un échantillon ;
- souder (53) une première couche sur ledit échantillon par ladite machine de gainage laser après avoir imposé ledit ensemble de paramètres de procédé de gainage laser ;
- comparer (54) une pluralité de données géométriques de la première couche avec une pluralité respective de plages de données de référence ;
- si la pluralité de données géométriques sont à l'extérieur de la pluralité respective de plages de données de référence, modifier l'ensemble de paramètres de procédé de gainage laser inter-corrélés et répéter les troisième (53) et quatrième (54) sous-étapes de l'étape de mise en place (50) ;
- si ladite pluralité de données géométriques se trouvent dans ladite pluralité de plages de données de référence, souder (55) une pluralité d'autres couches sur ledit échantillon par ladite machine de gainage laser ; et
- tester (56) ladite pluralité d'autres couches par inspection micrographique pour définir les paramètres pour faire fonctionner ladite phase de reconstitution.

2. Procédé (1) selon la revendication 1, dans lequel l'étape de préparation (11) est précédée par une autre étape d'inspection (70) de l'élément de turbomachine à réparer.

3. Procédé (1) selon la revendication 1 ou la revendication 2, dans lequel l'étape de test (15) de manière non destructive comprend les sous-étapes consistant à :

- tester la surface dudit volume reconstruit par inspection de contrôle par ressuage (15a) ;
- tester une partie intérieure dudit volume reconstruit par inspection par courants de Foucault (15b).

4. Procédé (1) selon l'une quelconque des revendications précédentes, dans lequel l'étape de test (15) de manière non destructive est suivie d'une autre étape de vérification finale de l'élément de turbomachine.

5. Procédé (1) selon l'une quelconque des revendications précédentes, dans lequel la mise en place de la machine de gainage laser inclut la fourniture d'une machine de gainage laser du type incluant un dispositif laser pour créer un faisceau laser et un dispositif d'alimentation en poudre pour souffler une poudre métallique vers ledit faisceau laser.

6. Procédé (1) selon l'une quelconque des revendications précédentes, dans lequel lesdits paramètres de procédé de gainage laser à identifier dans ladite sous-étape d'identification (51) incluent :

- vitesse de poudre,
- puissance du faisceau laser,
- type de poudre,
- vitesse de balayage,
- distance de sécurité,
- débit de gaz de couverture,
- filet de poudre,
- densité d'énergie.

7. Procédé (1) selon la revendication 6, dans lequel la densité d'énergie est comprise entre 110 et 120 J/mm$^2$.

8. Procédé (1) selon l'une quelconque des revendications précédentes, dans lequel ladite pluralité de données géométriques inclut :

- au moins un angle ($\alpha$) entre un bord de ladite première couche et une surface dudit échantillon ;
- la hauteur de ladite première couche,
- la largeur de ladite première couche,

**9.** Procédé (1) selon l'une quelconque des revendications précédentes, dans lequel ladite pluralité de données géométriques doivent être incluses dans la pluralité respective de plages suivantes :

- ratio entre ladite largeur et ladite hauteur de ladite première couche : supérieur à 5,
- ledit angle (α) entre un bord de ladite première couche et une surface dudit échantillon ; 150° à 160°.

**10.** Procédé (1) selon l'une quelconque des revendications précédentes, dans lequel, si ladite pluralité de données géométriques sont à l'extérieur de ladite pluralité de plages de données de référence, l'étape de mise en place (50) de la machine de gainage laser inclut les autres sous-étapes consistant à :

- modifier ledit ensemble de paramètres de procédé de gainage laser ;
- souder (53) une première couche sur ledit échantillon par ladite machine de gainage laser après le changement dudit ensemble de paramètres de procédé de gainage laser ;
- comparer (54) ladite pluralité de données géométriques de la première couche avec ladite pluralité respective de plages de données de référence.

**11.** Procédé (1) selon la revendication 8 ou l'une quelconque revendication dépendante de la revendication 8, dans lequel si ledit au moins un angle (α) est supérieur à ladite plage angulaire respective que la vitesse de poudre est réduite.

**12.** Procédé (1) selon l'une quelconque des revendications précédentes, dans lequel le test (56) de ladite pluralité d'autres couches par inspection micrographique inclut l'examen d'une porosité inter-étapes.

FIG. 1

FIG. 2

FIG. 3A

FIG. 3B

FIG. 3C

FIG. 4A

EP 2 892 686 B1

FIG. 4B

18

FIG. 4C

GENERAL LASER CLADDING PARAMETERS IDENTIFICATION

51

CLAD GEOMETRY IDENTIFICATION

52

SINGLE LAYER WELDING

53

54 — ACCEPT RESULT — NO

YES

55 — MULTIPLE LAYERS WELDING

YES

INTER-RUN POROSITY ← YES — ACCEPT RESULT — NO

56

NO

ITEM WELDING → ITEM MACHINING AS PER DRAWING

50

10

YES — FAIL ANY INSPECT ← WELDING AND RUN OUT EXAMINATION

NO

40

PACKAGING & SHIPPING

FIG. 5

FIG. 6

FIG. 7

FIG. 8

FIG. 9

FIG.10

FIG. 11

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1695789 A1
- US 20100287754 A
- US 20090057275 A